(19) Europäisches Patentamt
European Patent Office
Office européen des brevets

(11) EP 1 821 043 A2

(12) **EUROPEAN PATENT APPLICATION**

(43) Date of publication:
22.08.2007 Bulletin 2007/34

(51) Int Cl.:
*F24F 3/16* (2006.01)

(21) Application number: 07003263.6

(22) Date of filing: 15.02.2007

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 21.02.2006 JP 2006044012

(71) Applicant: Sanyo Electric Co. Ltd.
Moriguchi-shi, Osaka-fu (JP)

(72) Inventors:
• Fukushima, Toshio
Ota-shi,
Gunma 373-0813 (JP)
• Arakawa, Toru
Tatebayashi-shi
Gunma 374-0066 (JP)

(74) Representative: Glawe, Delfs, Moll
Patentanwälte
Postfach 26 01 62
80058 München (DE)

(54) **Air filtering apparatus**

(57) In an air filtering apparatus including a gas-liquid contact member (5) disposed in a housing (2), an electrolytic water supply pipe (17) for dropping electrolytic water to the gas-liquid contact member and an air blowing fan (7) for blowing air to the gas-liquid contact member to which the electrolytic water infiltrates and blowing out the air to a room, a first sheet member (76) having water retentivity for distributing the electrolytic water dropped from the electrolytic water supply pipe to the gas-liquid contact member is disposed above the gas-liquid contact member, and the first sheet member is equipped with recess portions (76D) at which scale accumulates when hardness components in the electrolytic water precipitate as the scale, or cut-out portions (92) through which the electrolytic water is positively discharged when hardness components in the electrolytic water precipitate as scale and accumulates on the first sheet member.

FIG.7

**Description**

BACKGROUND OF THE INVENTION

1. Field of the Invention

The present invention relates to an air filtering apparatus that can remove microorganisms such as bacteria, virus, fungus, etc. floating in the air (hereinafter merely referred to as "virus, etc.").

2. Description of the Related Art

There has been generally proposed an filtering apparatus in which electrolytic water mist is diffused into the air so as to be brought into direct contact with virus, etc., thereby inactivating virus, etc. (for example, JP-A-2002-181358).
However, the air filtering apparatus described above works effectively under a use atmosphere which fine particles of electrolytic water mist easily reach, that is, in a relatively small space, however, it hardly works effectively in a large space such as such as a kindergarten, an elementary/junior high/high school, long-term care insurance facilities, a hospital or the like.
In order to solve the above problem, this applicant has proposed an air filtering apparatus in which a gas-liquid contact member having high water retentivity is disposed in the housing, electrolytic water achieved by electrolyzing tap water is dropped to the gas-liquid contact member, indoor air is blown to the gas-liquid contact member so as to be subjected to air filtering by the electrolytic water while passing through the gas-liquid contact member, and then the indoor air concerned is discharged to a room (large space) again.
According to this air filtering apparatus, in order to infiltrate electrolytic water into the whole area of the gas-liquid contact member, a water distributing sheet (sheet member) for distributing the dropped electrolytic water to the whole area of the gas-liquid contact member is disposed above the gas-liquid contact member, and the electrolytic water is diffused by the distribution sheet, whereby the electrolytic water is substantially uniformly dropped onto the upper edge portion of the gas-liquid contact member.
However, the electrolytic water contains hardness components (for example, calcium ion), and thus when this hardness component accumulates as scale, the scale is uniformly accumulated on the distribution sheet, so that the water permeability of the distribution sheet is prevented. In this case, it is impossible to infiltrate electrolytic water into the whole area of the gas-liquid contact member, and thus there is concern that the air filtering efficiency is lowered.

SUMMARY OF THE INVENTION

An object of the present invention is to provide an air filtering apparatus that can prevent reduction in air filtering efficiency by securing the water permeability of a distribution sheet even when a hardness component in the electrolytic water accumulates as scale.
In order to attain the above object, according to a first aspect of the present invention, an air filtering apparatus comprising a gas-liquid contact member (5) disposed in a housing (2), an electrolytic water supply pipe (17) for dropping electrolytic water to the gas-liquid contact member so that the electrolytic waterinfiltratesinto the gas-liquid contact member, and an air blowing fan (7) for blowing air to the gas-liquid contact member to which the electrolytic water infiltrates and blowing out the air to a room, is characterized in that a first sheet member (76) having water retentivity for distributing the electrolytic water dropped from the electrolytic water supply pipe to the whole area of the gas-liquid contact member is disposed above the gas-liquid contact member, and the first sheet member is equipped with recess portions (76D) at which scale accumulates when hardness components in the electrolytic water precipitate as the scale.
In the above air filtering apparatus, the first sheet member (76) is further equipped with projecting portions that are respectively continuous with the recess portions in the longitudinal direction of the first sheet member.
In the above air filtering apparatus, the first sheet member is designed in a corrugated shape.
In the above air filtering apparatus, the electrolytic water supply pipe is equipped with water spray holes (77) for spraying the electrolytic water therethrough, the water spray holes (77) are arranged at substantially the same pitch, and the pitch of the recess portions is set to be narrower than the pitch of the water spray holes.
In the above air filtering apparatus, the gas-liquid contact member comprises a plurality of element portions (E), and a second sheet member (84) having water retentivity is disposed above the upper end surfaces of the respective element portions substantially in contact with the upper end surfaces concerned.
In the above air filtering apparatus, a water spray box (74) in which the electrolytic water supply pipe is accommodated is disposed above the gas-liquid contact member, the first sheet member is held and located at a lower position than the electrolytic water supply pipe inside the water spray box, and the second sheet member is disposed below the first sheet member so as to be spaced from the first sheet member.

According to a second aspect of the present invention, an air filtering apparatus comprising a gas-liquid contact member (5) disposed in a housing (2), an electrolytic water supply pipe (17) for dropping electrolytic water to the gas-liquid contact member so that the electrolytic water infiltrates into the gas-liquid contact member, and an air blowing fan (7) for blowing air to the gas-liquid contact member to which the electrolytic water infiltrates and blowing out the air to a room, is characterized in that a first sheet member (91) having water retentivity for distributing the electrolytic water dropped from the electrolytic water supply pipe to the whole area of the gas-liquid contact member is disposed above the gas-liquid contact member, and the first sheet member is equipped with cut-out portions (92) through which the electrolytic water is positively discharged when hardness components in the electrolytic water precipitate as scale and accumulates on the first sheet member.

In the above air filtering apparatus, the gas-liquid contact member comprises a plurality of element portions (E), and a second sheet member (84) having water retentivity is disposed above the upper end surfaces of the respective element portions substantially in contact with the upper end surfaces concerned.

In the above air filtering apparatus, a water spray box (74) in which the electrolytic water supply pipe is accommodated is disposed above the gas-liquid contact member, the first sheet member is held and located at a lower position than the electrolytic water supply pipe inside the water spray box, and the second sheet member is disposed below the first sheet member so as to be spaced from the first sheet member.

According to the present invention, the recess portions (valley portions) at which the scale is deposited and the projecting portions (mountain portions) are formed in the first sheet member so as to be continuous with one another. Therefore, the scale can be prevented from being uniformly deposited on the first sheet member, and the water permeability of the first sheet member can be kept through the projecting portions. In addition, the lifetime of the first sheet member can be increased and thus the air filtering efficiency can be prevented from being lowered.

Furthermore, even when scale accumulates on the first sheet member, the water permeability of the first sheet member can be secured through the cut-out portions through which electrolytic water can be positively discharged. In addition, the lifetime of the first sheet member can be increased and thus the air filtering efficiency can be prevented from being lowered.

BRIEF DESCRIPTION OF THE DRAWINGS

Fig. 1 is a perspective view showing a first embodiment of the present invention;
Fig. 2 is a perspective view sowing the internal construction;
Fig. 3 is a longitudinally-sectional view of a housing;
Figs. 4A and 4B are systematic diagrams showing a mechanism for dropping electrolytic water to a gas-liquid contact member, wherein Fig. 4A is a side view and Fig. 4B is a diagram showing an electrolytic bath;
Fig. 5 is a perspective view showing the gas-liquid contact member;
Fig. 6 is a longitudinally-sectional view showing the gas-liquid contact member;
Fig. 7 is a partially cross-sectional view showing the gas-liquid contact member;
Fig. 8 is a plan view showing a first water distributing sheet according to a second embodiment;
Fig. 9 is a longitudinally-sectional view of a gas-liquid contact member according to the second embodiment; and
Fig. 10 is a partially cross-sectional view showing the gas-liquid contact member of the second embodiment.

DETAILED DESCRIPTION OF THE PREFERRED EMBODIMENTS

Preferred embodiments according to the present invention will be described hereunder with reference to the accompanying drawings.

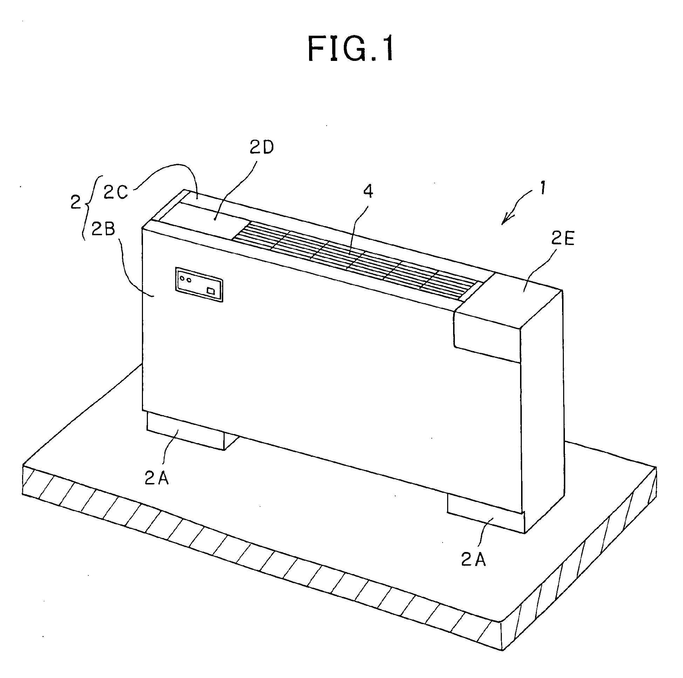

In Fig. 1, reference numeral 1 represents an on-floor mount type air filtering apparatus. The on-floor mount type air filtering apparatus 1 has a box-shaped housing 2, and the housing 2 has leg pieces 2A, a front panel 2B and a top panel 2C. Furthermore, an operating lid 2D and an opening/closing lid 2E are arranged in the lateral direction at both the sides of the top panel 2C.

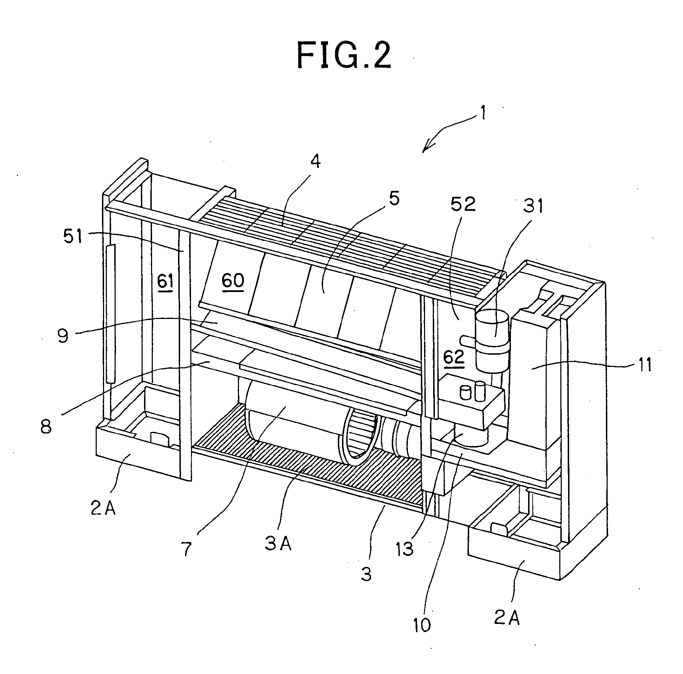

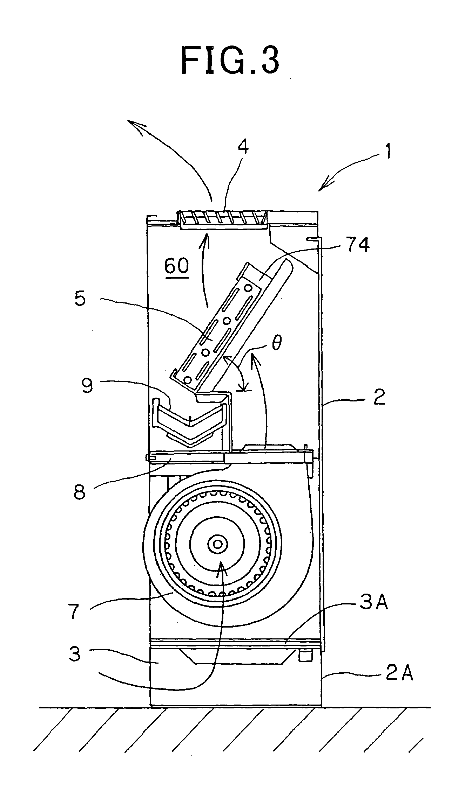

As shown in Fig. 2, two partition plates 51 and 52 extending in the vertical direction are provided in the housing 2, and the inside of the housing 2 is divided into three chambers (air filtering chamber 60, an electrical component chamber 61 and a water supply chamber 62) by the partition plates 51 and 52. A lateral ly-elongated suction port 3 is formed at the lower portion of the air filtering chamber formed at the center of the housing 2, and a pre-filter 3A is disposed above the suction port 3. An air blowing fan 7 is supported through a support plate 8 by the partition plates 51 and 52 and disposed above the pre-filter 3A. Furthermore, as shown in Fig. 3, a gas-liquid contact member 5 having high water retentivity is obliquely disposed above the support plate 8 so as to downwardly extend from the back side of the housing 2 to the front side thereof. In this embodiment, the gas-liquid contact member 5 is designed in a rectangular shape, and it is disposed obliquely (so as to be tilt) in the housing 2, whereby the height and depth of the housing 2 can be reduced without reducing the contact area of the gas-liquid contact member 5, and thus the housing 2 can be miniaturized.

The inclination angle $\theta$ of the gas-liquid contact member 5 is preferably set to 30° or more. If the inclination angle is less than 30°, the dropped electrolytic water does not flow along the slope of the gas-liquid contact member 5, but falls downwardly. Furthermore, if the inclination angle approaches to 90°, the flowing direction of air passing through the gas-liquid contact member 5 is substantially horizontal and thus it is difficult to blow the air upwardly. When the blow-out direction of the air is approached to the horizontal direction, it is impossible to blow the air far away. In this case, the air filtering apparatus is not suitable to sterilize air in a large space. It is preferable that the inclination angle $\theta$ satisfies the condition: $80° > \theta > 30°$, and it is more preferable that the inclination angle $\theta$ satisfies the condition: $75° > \theta > 55°$. In this embodiment, the inclination angle is set to about 57°.

A water receiving tray 9 for receiving electrolytic water passing through the gas-liquid contact member 5 is disposed between the gas-liquid contact member 5 and the air blowing fan 7, and a laterally-elongated blow-out port 4 is formed above the gas-liquid contact member 5.

Electric components (not shown) such as a print board, etc. for controlling the operation of the air filtering apparatus 1 are accommodated in the electric component chamber 61 formed at the left side of the housing 2. Furthermore, in the water supply chamber 62 formed at the right side of the housing 2 are accommodated a water supply tank support tray 10 for stocking electrolytic water received by the water receiving tray 9, a circulating pump 13 for pumping up electrolytic water stocked in the water supply tank support tray 10, an electrolytic water bath 31 for electrolyzing water pumped up by the circulating pump 13 to generate electrolytic water, etc. as shown in Fig. 2.

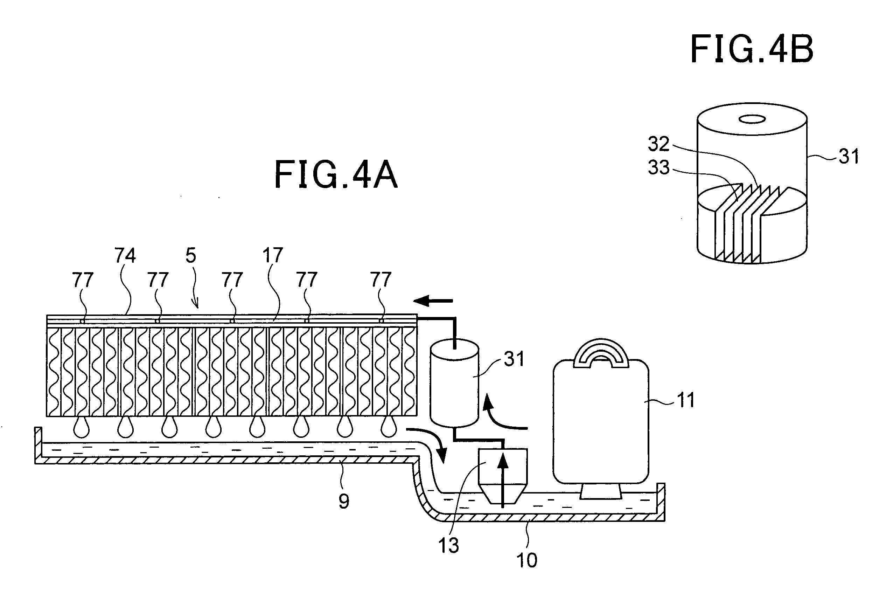

Figs 4A and 4B show an electrolytic water supply mechanism for dropping electrolytic water to the gas-liquid contact member 5.

The water receiving tray 9 is disposed below the gas-liquid contact member 5, and the water supply tank support tray 10 is connected to the water receiving tray 9. A water supply tank 11 for supplying water such as tap water containing chlorine ions into the support tray 10, and the circulating pump 13 are disposed in the water supply tank support tray 10. The electrolytic bath 31 is connected to the circulating pump 13, and an electrolytic water supply pipe 17 is connected to the electrolytic bath 31. The electrolytic water supply pipe 17 is designed to have many water spray holes 77 formed at substantially equal intervals along the axial direction thereof. Each spray hole 77 is formed at the position corresponding to the substantially center portion of each element portion E (described later) of the gas-liquid contact member 5.

As shown in Fig. 4A, the electrolytic bath 31 is disposed above the water receiving tray 9 and the water supply tank support tray 10. When the circulating pump 13 starts the operation, water pumped up from the water supply tank support tray 10 is stocked in the electrolytic bath 31, and when the circulating pump 13 stops the operation, the water in the electrolytic bath 31 freely falls to the water supply tank support tray 10 by gravitational force, and thus the electrolytic bath 31 is empty.

As shown in Fig. 4B, the electrolytic bath 31 has pairs of positive and negative electrodes 32 and 33 which are alternately arranged, and when current is supplied to these electrodes 32, 33, water such as tap water flowing into the electrolytic bath 31 is electrolyzed to generate active oxygen specifies. Here, the active oxygen specifies means oxygen molecules having higher oxidizing activity than normal oxygen and also related substance thereof, and contain not only so-called narrowly-defined active oxygen such as superoxide anion, singlet oxygen, hydroxyl radical and hydrogen peroxide, but also so-called broadly-defined active oxygen such as ozone, hypohalogen acid (hypochlorous acid), etc. the electrolytic tank 31 is disposed in the proximity to the gas-liquid contact member 5, and it is designed so that active oxygen species generated by electrolyzing water such as tap water can be immediately supplied to the gas-liquid contact member 5.

The electrodes 32, 33 are electrode plates each of which comprises a base of Ti (titan) and a coated layer of Ir (iridium), Pt (platinum). The current value applied to the electrodes 32, 33 is set so that a current density of several mA (milliampere)/cm$^2$ (square centimeter) to several tens mA/cm$^2$ is achieved and a predetermined concentration of free residual chlorine (for example, 1 mg/l liter) is generated, for example.

When current is supplied to tap water by the electrodes 32, 33, the following reaction occurs at the cathode:

$$4H^+ + 4e^- + (4OH^-) \rightarrow 2H_2 + (4OH^-)$$

Furthermore, the following reaction occurs at the anode:

$$2H_2O \rightarrow 4H^+ + O_2 + 4e^-{}^-$$

At the same time, chlorine ions contained water (chlorine ions are added in tap water in advance) reacts as follows:

$$2Cl^- \rightarrow Cl_2 + 2e^-$$

Furthermore, $Cl_2$ thus generated reacts with water as follows:

$$Cl_2 + H_2O \rightarrow HClO + HCl$$

In this construction, by supplying current to the electrodes 32, 33, HClO (hypochlorous acid) having strong sterilizing force is generated. Therefore, air is passed through the gas-liquid contact member 5 supplied with this hypochlorous acid, thereby preventing breeding of various bacteria in the gas-liquid contact member 5. Accordingly, virus, bacteria, etc. floating in the air passing through the gas-liquid contact member 5 can be inactivated. Furthermore, when odor components pass through the gas-liquid contact member 5, the odor components also react with hypochlorous acid in the electrolytic water, and they are ionized and dissolved, whereby the odor components can be removed from air and the air is deodorized.

Next, the gas-liquid contact member 5 will be described.

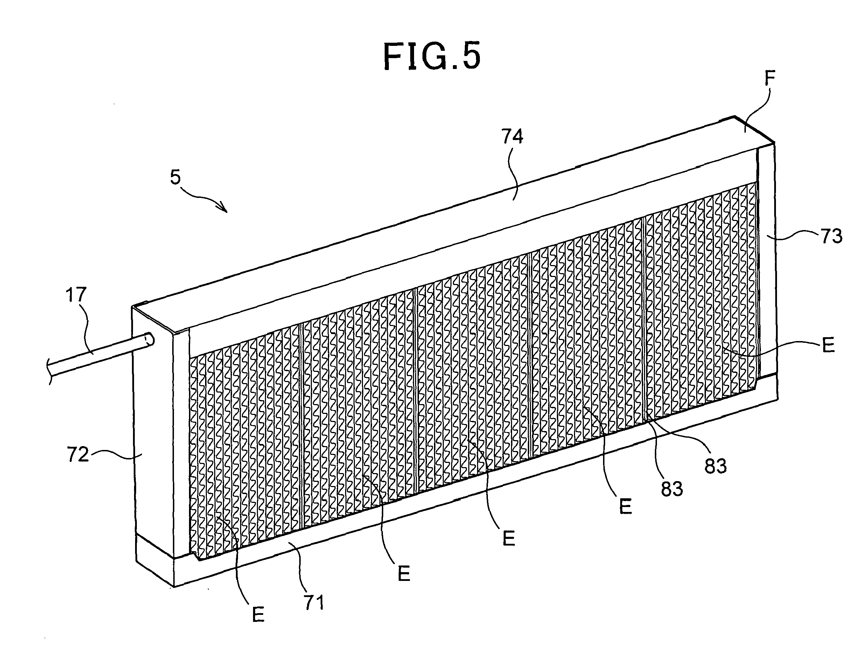

As shown in Fig. 5, the gas-liquid contact member 5 comprises plural (five in this embodiment) element portions E through which electrolytic water is infiltrated and air is passed, and a frame portion F for supporting these element portions E. The frame portion F has a lower frame 71, a pair of vertical frames 72, 73 fixed to both the ends of the lower frame 71, and an upper frame 74 suspended between the upper end portions of the vertical frames 72 and 73. In this construction, the electrolytic water supply pipe 17 is accommodated in the upper frame 74 as a water spray box to drop electrolytic water from the upper side of the element portions E. The electrolytic water supply pipe 17 is disposed so as to penetrate through the upper portion of one vertical frame 72 and extend in the longitudinal direction of the upper frame 74, and the tip of the electrolytic water supply pipe 17 is fixed to the upper portion of the other vertical frame 73.

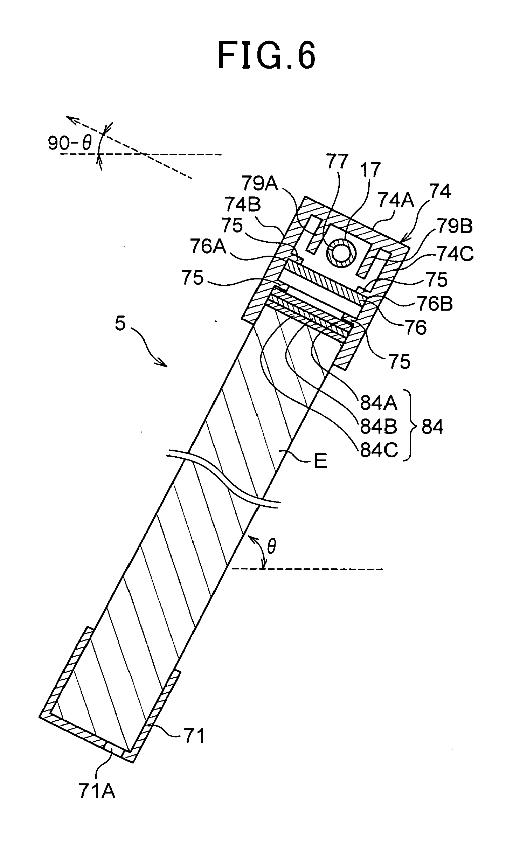

As shown in Fig. 6, the upper frame 74 has an upper plate 74A, a front plate 74B and a back plate 74C and it is designed so as to have a substantially U-shaped cross-section. A pair of support members 75 extending substantially in parallel to the upper plate 74A are formed on the inner surface of each of the front plate 74B and the back plate 74C. These support members 75 are formed at lower positions than the electrolytic water supply pipe 17, and a first water distributing sheet (first sheet member) 76 to be disposed above the element portions E is inserted and supported between the pairs of the support members 75.

The first water distributing sheet 76 has water retentivity, and electrolytic water dropped from many water spray holes 77 formed in the electrolytic water supply pipe 17 is diffused to the whole area of the first water distributing sheet 76, whereby electrolytic water can be uniformly supplied to the upper surface of the element portions E. Furthermore, a pair of guide pieces 79A and 79B that extend substantially in parallel to the front plate 74B and the back plate 74C and guide the electrolytic water supply pipe 17 are formed on the inner surface of the upper plate 74A. Furthermore, a drain port 71A for discharging extra electrolytic water dropped to the element portions E to the water receiving tray 9 is formed in the lower surface of the lower frame 71.

As shown in Fig. 6, spray holes 77 which extends (faces) substantially laterally toward the front side of the housing 2 are formed in the electrolytic water supply pipe 17 so as to substantially uniformly supply water to the whole surface of the first water distributing sheet 76. In this specification, the substantially laterally extending (facing) direction contains not only the horizontal direction, but also any direction (any angle) along which electrolytic water can be uniformly supplied to the first water distributing sheet 76.

Specifically, as shown in Fig. 6, the water spray holes 77 are formed so as to face the guide piece 79A formed at the front plate 74B side of the upper frame 74, and when the gas-liquid contact member 5 is disposed at an inclination (tilt) angle of $\theta$ (degree), the water spray holes 77 are formed at the position where the elevation angle thereof to the horizontal plane is equal to $90-\theta$ (degree). The water spray holes 77 are formed substantially in alignment so as to be located at predetermined intervals in the axial direction of the electrolytic water supply pipe 17.

According to this construction, the electrolytic water discharged from the water spray holes 77 of the electrolytic water supply pipe 17 abuts against the guide piece 79A formed on the inner surface of the upper frame 74, and drops to the upper portion 76A side of the first water distributing sheet 76. The dropping electrolytic water moves from the upper portion 76A side of the first water distributing sheet 76 to the lower portion 76B side by using the slope of the first water distributing sheet 76, whereby the electrolytic water infiltrates and diffuses to the whole area of the first water distributing sheet 76. Furthermore, the total spray water amount corresponding to the hole diameter from the water spray holes 77 is set to be smaller than the discharge amount of the circulating pump 13. Therefore, the pressure of the electrolytic water in the electrolytic water supply pipe 17 is increased, and thus the electrolytic water is supplied till the water spray hole at the end of the electrolytic water supply pipe 17 from one side to the other side, whereby the electrolytic water can be uniformly infiltrated all over in the longitudinal direction of the gas-liquid contact member 5.

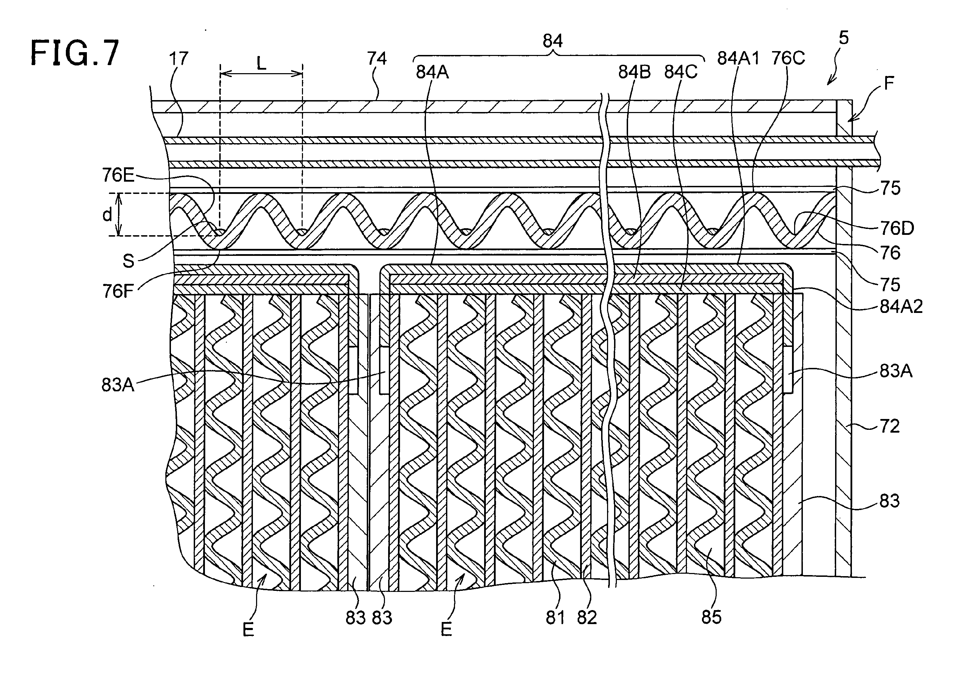

Each element portion E is formed by laminating corrugated wave-shaped members 81 and flat-plate type members 82 as shown in Fig. 7, and a pair of frame members 83 constituting a vertical frame for the element portion E concerned are arranged at both the ends of the laminated corrugated members 81 and flat-plate members 82. The frame members 83 are arranged at both the ends of the laminated assembly of the corrugated members 81 and flat-plate members 82, whereby the element portion E concerned can be easily handled. Furthermore, the element portion E is constructed by laminating the corrugated members 81 and flat-plate members 82, and thus a large number of substantially triangular openings 85 are formed between the corrugated member 81 and the flat-plate member 82. Therefore, there can be achieved such a structure that the gas-liquid contact area can be broadly secured, the electrolytic water can be dropped and clogging hardly occurs.

The respective element portions E are arranged between the vertical frames 72 and 73 of the frame portion F, and plural second water distributing sheets (second sheet members) 84 are arranged on the upper end surfaces of the element portions E so as to be substantially in contact with the end surfaces concerned. The second water distributing sheets 84 have water retentivity and serve to diffuse the electrolytic water dropped to the upper surfaces of the respective element portions E through the first water distributing sheet 76 onto the whole upper surfaces of the element portions E. The second water distributing sheets 84 are disposed below the first sheet member 76 so as to be spaced from the first sheet member 76.

In this embodiment, the second water distributing sheet 84 comprises three water distributing sheets (an upper water distributing sheet 84A, an intermediate water distributing sheet 84B and a lower water distributing sheet 84C). The length of the intermediate water distributing sheet 84B and the lower water distributing sheet 84C is set to be substantially equal to the length in the width direction of the assembly of the laminated corrugated members 81 and the flat-plate members 82 of each element portion E. The upper water distributing sheet 84A comprises a base portion 84A1 having substantially the same length as the intermediate water distributing sheet 84B and the lower water distributing sheet 84C, and bent portions 84A2 provided to both the ends of the base portion 84A1. By inserting the bent portions 84A2 into an insertion port 83A formed in the frame member 83, the three water distributing sheets 84A to 84C can be stacked and fixed to the upper surface of the element portion E.

The corrugated members 81, the flat-plate members 82, the first water distributing sheet 76 and the second water distributing sheet 84 are formed of materials which have liquid permeability and are hardly deteriorated by electrolytic water, for example, polyolefin type resin (polyethylene resin, polypropylene resin or the like), PET (Polyethylene terephthalate) resin, vinyl chloride resin, fluorocarbon polymer (PTFE, PFA, ETFE or the like), ceramic type material or the like. In this construction, PET resin is used. Electrolytic water has an antirust property, and thus it is unnecessary to coat antirust agent to the gas-liquid contact member 5.

Electrolytic water contains hardness components such calcium ions, magnesium ions, etc. Therefore, in the construction that electrolytic water is circulated by the circulating pump 13 as in the case of this embodiment, the concentration of the hardness components increases with time lapse, and thus the hardness components may deposit as scale on the first water distributing sheet 76. The size of this scale is larger than the mesh diameters of the first water distributing sheet 76, and thus uniformly accumulates on the first water distributing sheet 76 without passing through the first water distributing sheet 76, so that water permeability of the first water distributing sheet 76 is disturbed over the whole surface thereof.

In this embodiment, as shown in Fig. 7, the first water distributing sheet 76 is designed in such a corrugated shape that the mount portions (projecting portions) 76C and the valley portions (recess portions) 76D are continuous with one another, and when the hardness components in the electrolytic water deposit as scale S, the mount portions 76D function as the deposition portions for depositing the scale S. That is, in this construction, by concentratively depositing the scale S into the mount portions 76D, the scale S is prevented from being uniformly deposited on the whole surface of the first water distributing sheet 76, so that the electrolytic water can be supplied to the second water distributing sheet 84 through the mount portions 76C of the first water distributing sheet 76.

Furthermore, in this construction, the mount portions 76C and the valley portions 76D are formed so as to be continuous with one another in the longitudinal direction of the gas-liquid contact member 5. Therefore, the electrolytic water dropped onto the first water distributing sheet 76 is prevented from flowing in the longitudinal direction of the first water distributing sheet, so that the electrolytic water is prevented from flowing out fromboth the ends of the first water distributing sheet 76.

The valley portions 76D are formed so as to have substantially the same depth d, and this depth d is set to a distance at which depositing scale S can be surely held. Furthermore, the valley portions 76D are also disposed substantially at the same pitch L, and this pitch L is set to be more minute than the pitch of the water spray holes 77 formed in the electrolytic water supply pipe 17. This pitch L is set to a proper value by experiments or the like so that the diffusion function of the first water distributing sheet 76 can be held.

According to this construction, even when the hardness components in electrolytic water deposit as scale S, this scale S is collected at the valley portions 76D of the first water distributing sheet together with the electrolytic water, and deposit at the valley portions 76D. In the valley portions 76D at which the scale S accumulates, electrolytic water hardly infiltrates into the first water distributing sheet 76, however, no scale S accumulates between both the side portions of the valley portions 76D (for example, at the mountain portions 76C or at each slope portion 76E between the mountain portion 76C and the valley portion 76D). Therefore, it is possible to easily infiltrate the electrolytic water into the first water distributing sheet 76, water permeability of electrolytic water into the first water distributing sheet 76 can be secured, and the lifetime of the first water distributing sheet 76 can be increased.

In this construction, the electrolytic water infiltrating into the first water distributing sheet 76 is dropped from the lowermost portion 76F of the first water distributing sheet 76 (that is, the back side of the valley portions 76D). Even in this case, since the pitch L of the valley portions 76D is set to be narrower than the pitch of the water spray holes 77 formed in the electrolytic water supply pipe, the electrolytic water supplied through the first water distributing sheet 76 to the element portions E is more minutely distributed as compared with the electrolytic water discharged from the water spray holes 77.

Next, the air filtering operation of the on-floor mount type air filtering apparatus 1 will be described.

In Fig. 1, the operation panel (not shown) is provided so as to be exposed to the outside when the operation lid 2D is opened, and the driving of the on-floor mount type air filtering apparatus 1 is started by operating the operation panel. When this driving is started, as shown in Fig. 4A, the circulating pump 13 is driven, and water such as tap water stocked in the water supply tank support tray 10 is supplied to the electrolytic bath 31.

In this electrolytic bath 31, by supplying current to the electrodes 32, 33, the water is electrolyzed to generate electrolytic water containing active oxygen specifies. This electrolytic water is discharged from the water spray holes 77 (Fig. 6) of the electrolytic water supply pipe 17 so as to abut against the guide piece 79 formed on the upper frame 74, and then dropped to the first water distributing sheet 76. Accordingly, the electrolytic water is diffused to the whole area of the first water distributing sheet 76, and dropped to the second water distributing sheet 84.

Furthermore, even when the hardness components in the electrolytic water deposit as scale S, the scale S is collected to the valley portions 76D of the first water distributing sheet 7 6 together with electrolytic water, and accumulates at the valley portions 76D. Therefore, the electrolytic water is diffused to the whole area of the first water distributing sheet 76 through both the side portions of the valley portions 76D, and the electrolytic water drops to he second water distributing sheet 84.

The dropping electrolytic water infiltrates into the second water distributing sheet 84, and diffuses to the whole area of the second water distributing sheet 84, so that the electrolytic water is supplied to the whole area of the upper portions of the element portions E. Accordingly, the electrolytic water infiltrates into the corrugated elements 81 and the flat-plate members 82 of the element portions E in every corner.

Extra electrolytic water dropped to the gas-liquid contact member 5 is discharged to the water receiving tray 9 through the drain port 71A (Fig. 6) formed at the lower frame 71, and flows through the down slope of the water receiving tray 9 into the water supply tank support tray 10, so that the electrolytic water is stocked in the water supply tank support tray 10. In this construction, water is supplied in a circulation system, and thus a proper amount of water (tap water) in the water supply tank 11 is supplied to the water supply tank support tray 10 when the amount of water is reduced by vaporization or the like. The water supply tank 11 is disposed so as to be freely detached by opening the opening/closing lid 2E (see Fig. 1), and the water supply tank 11 is detached to supplement water such as tap water or the like.

Indoor air is supplied through the air blowing fan 7 to the gas-liquid contact member 5 to which the electrolytic water is infiltrated. The indoor air is brought into contact with the active oxygen specifies of the electrolytic water infiltrating in the gas-liquid contact member 5 and then blown out to the room again. For example, when influenza virus inducing infection is floated in the indoor air, the active oxygen species has a function of breaking and vanishing (removing) the surface proteins of the virus. When influenza virus is broken, the influenza virus is not bonded to a receptor which is required for the influenza virus to infect, and thus the infection can be prevented. As a demonstration test result, it has been found that when air having influenza virus floated therein is passed through the gas-liquid contact member 5 of this embodiment, 99% or more of influenza virus can be removed (inactivated).

According to this embodiment, the air filtering apparatus is equipped with the gas-liquid contact member 5 disposed in the housing 2, the electrolytic water supply pipe 17 for dropping electrolytic water to the gas-liquid contact member 5, and the air blowing fan 13 for blowing air to the gas-liquid contact member 5 to which electrolytic water infiltrates and then blowing out the air into the room. Furthermore, the first water distributing sheet 76 having water retentivity for distributing the electrolytic water dropped from the electrolytic water supply pipe 17 to the whole area of the gas-liquid contact member 5 is disposed at the upper portion of the gas-liquid contact member 5. The first sheet member 76 has the valley portions 76D for accumulating the scale S when the hardness components in the electrolytic water deposit as scale S. Therefore, the electrolytic water can be easily infiltrated at both the side portions of the valley portions 76D (for example, at the mountain portion 76C or at the slope portion 76E between the mount portion 76C and the valley portion 76D), the water permeability of the electrolytic water into the first water distributing sheet 76 can be secured, and the lifetime of the first water distributing sheet 76 can be increased.

Therefore, the electrolytic water can be diffused into the whole area of the first water distributing sheet 76, and the electrolytic water can be substantially uniformly infiltrated into the whole area of the element portions E. Accordingly, by passing air through the element portions E, the air filtering efficiency of air passing through the element portions E can be prevented from being lowered.

In this embodiment, the mount portions 76C and the valley portions 76D of the first water distributing sheet 76 are formed so as to be continuous with one another in the longitudinal direction of the gas-liquid contact member 5. Therefore, the electrolytic water dropped onto the first water distributing sheet 76 is prevented from flowing along the longitudinal direction of the first water distributing sheet 76, and thus the electrolytic water is prevented from flowing out from both the ends of the first water distributing sheet 76.

Furthermore, according to this embodiment, the valley portions 76D are formed substantially the same pitch L, and the pitch L is set to be narrower than the pitch of the water spray holes 77 formed in the electrolytic water supply pipe 17. Therefore, the electrolytic water infiltrated into the first water distributing sheet 76 is dropped from the lowermost portion 76F of the first water distributing sheet 76, whereby the actual water spray pitch can be set to be narrower than the water spray pitch when the electrolytic water is directly sprayed from the water spray holes 77 of the electrolytic water supply pipe 17.

According to this embodiment, a water spray box 74 in which the electrolytic water supply pipe 17 is accommodated is disposed at the upper portion of the gas-liquid contact member 5, and the first water distributing sheet 76 is held and located at a lower position than the electrolytic water supply pipe 17 inside the water spray box 74. Furthermore, the second water distributing sheet 84 is disposed below the first water distributing sheet 76 so as to be spaced from the first water distributing sheet 84. Accordingly, the electrolytic water discharged through the first water distributing sheet 76 abut against the surface of the second water distributing sheet 84 and diffuses into the second water distributing sheet 84, thereby implementing the distribution of the electrolytic water.

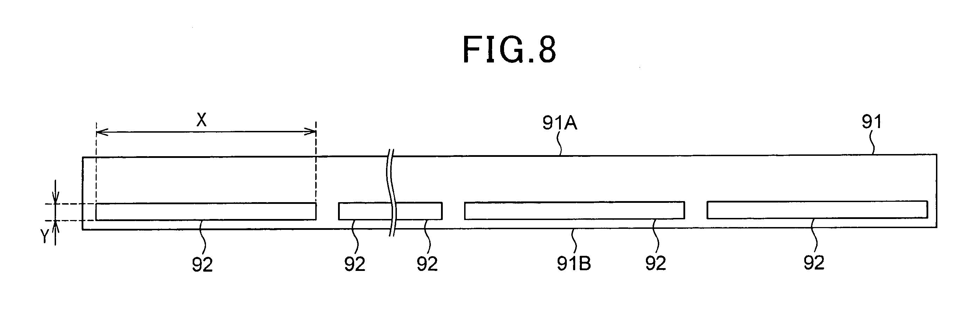

Next, another embodiment of the present invention will be described with reference to Figs. 8 to 10.

In this embodiment, the first water distributing sheet (first sheet member) 91 is formed not in the corrugated shape, but in the flat-plate shape, and also cut-out portions 92 are provided to the first water distributing sheet 91. Therefore, the same elements or elements having the same functions as the above embodiment are represented by the same reference numerals, and the description thereof is omitted.

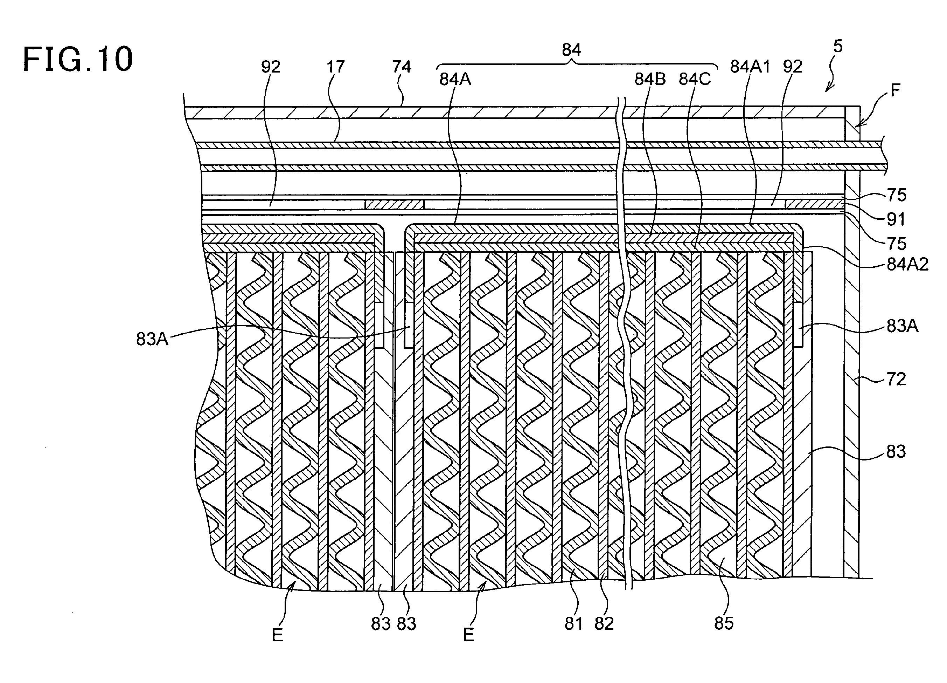

As shown in Fig. 8, the first water distributing sheet 91 is constructed by forming plural (five in this embodiment) cut-out portions 92 in a flat plate. The cut-out portions are designed so that electrolytic water is positively discharged therethrough when hardness components in electrolytic water precipitates as scale and accumulates on the first water distributing sheet 91. Specifically, each cut-out portion 92 is formed in connection with each element portion E, and the lateral width X of each cut-out portion is set to be substantially identical to the lateral width of the element portion E (see Fig. 10). On the basis of experiments or the like, the depth y of each cut-out portion 92 has been experimentally set to such a value that water permeability is secured and electrolytic water dropped through the aperture area of the cut-out portion 92 can be discharged.

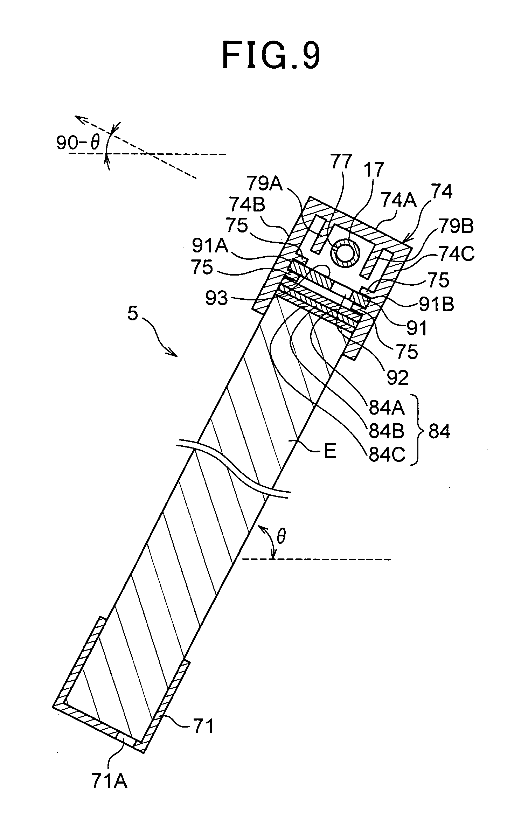

Furthermore, as shown in Fig. 9, the gas-liquid contact member 5 is disposed in a diagonal position (i.e., tilted) in the housing, and thus the first water distributing sheet 91 disposed in the upper frame 74 of the gas-liquid contact member 5 is also disposed in a diagonal position (i.e., tilted). In this construction, electrolytic water is dropped from the upper portion 91A side of the tilted first water distributing sheet 91, and thus the cut-out portions 92 are formed at the lower portion 91B side of the first water distributing sheet 91. That is, normally, electrolytic water discharged from the water spray holes 77 of the electrolytic water supply pipe 17 abuts against the guide piece 79A formed on the inner surface of the upper portion 74, and is dropped to the upper portion 91A side of the first water distributing sheet 91. The dropped electrolytic water infiltrates and diffuses to the whole area of the first water distributing sheet while moving from the upper portion 91A side of the first water distributing sheet 91 to the lower portion 91B side by using the slope of the first water distributing sheet 91.

When hardness components in electrolytic water precipitates as scale, this scale accumulates at a deposition-expected portion 93 of the upper portion 91A side of the first water distributing sheet 91. Therefore, at the upper portion 91A side of the first water distributing sheet 91, electrolytic water hardly infiltrates into the first water distributing sheet 91, and the non-infiltrating electrolytic water flows to the lower portion 91B side of the first water distributing sheet 91.

In this construction, the cut-out portions 92 are formed at the lower portion 91B side of the oblique first water distributing sheet 91, and thus the non-infiltrating electrolytic water is supplied to the element portions E through the cut-out portions 92, whereby the electrolytic water is prevented from flowing out from both the first water distributing sheet 91. Furthermore, in this construction, the electrolytic water is supplied through the cut-out portions 92 to the second water distributing sheet 84. Therefore, the electrolytic water is diffused to the substantially whole area of the element portions E by the second water distributing sheet 84. Therefore, by passing air through the element portions E, the air filtering efficiency of the air passing through the element portions E can be prevented from being lowered.

Furthermore, since a large amount of electrolytic water is supplied to the element portions E through the cut-out portions 92, if the droplets of supplied electrolytic water are large, there may occur a (so-called water scattering) phenomenon that the droplets are scattered to the room by the air blowing fan 13. However, according to this construction, since the electrolytic water is infiltrated and diffused into the second water distributing sheet, large water droplets are prevented from supplied to the element portions E, so that occurrence of the water scattering phenomenon can be prevented.

According to this embodiment, the air filtering apparatus is equipped with the gas-liquid contact member 5 disposed in the housing 2, the electrolytic water supply pipe 17 for dropping electrolytic water to the gas-liquid contact member 5 and the air blowing fan 13 for blowing air to the gas-liquid contact member 5 to which electrolytic water infiltrates and then blowing out the air to the room. Furthermore, the first water distributing sheet 91 having water retentivity for distributing electrolytic water dropped from the electrolytic water supply pipe 17 is disposed above the gas-liquid contact member 5, and when hardness components in electrolytic water precipitate as scale and accumulates on the first water distributing sheet, the electrolytic water can be positively discharged through the cut-out portions 92. Therefore, even when the water permeability of the first water distributing sheet 91 is disturbed by the scale, the electrolytic water can be supplied through the cut-out portions 92 to the element portions E. Accordingly, the electrolytic water can be substantially uniformly infiltrated to the whole area of the element portions E, and by passing air through the element portions E, the air filtering efficiency of the air passing through the element portions E can be prevented from being lowered.

The present invention is not limited to the above embodiment, and various modifications may be made without departing from the subject matter of the present invention. For example, ozone ($O_3$), hydrogen peroxide ($H_2O_2$) or the like may be generated as active oxygen specifies. In this case, when platinum tantalum electrodes are used as the electrodes 32 and 33, active oxygen specifies can be highly efficiently and stably generated from water containing diluted ion specifies by electrolysis.

At this time, at the anode, the following reaction occurs:

$$2H_2O \rightarrow 4H^+ + O_2 + 4e^-$$

Simultaneously with the above reaction, the following reactions occur, and ozone ($O_3$) is generated.

$$3H_2O \rightarrow O_3 + 6H^+ + 6e^-$$

$$2H_2O \rightarrow O_3 + 4H^+ + 4e^-$$

Furthermore, at the cathode, the following reactions occur:

$$4H^+ + 4e^- + (4OH^-) \rightarrow 2H_2 + (4OH^-)$$

$$O_2^- + e^- + 2H^+ \rightarrow H_2O_2$$

That is, $O_2^-$ generated through the electrode reaction and $H^+$ in solution are bonded to each other to generate hydrogen peroxide ($H_2O_2$).

In this construction, ozone ($O_3$) and hydrogen peroxide ($H_2O_2$) which have strong sterilizing power are generated by supplying current to the electrodes, and electrolytic water containing ozone ($O_3$) and hydrogen peroxide ($H_2O_2$) can be created. The concentration of ozone or hydrogen peroxide in the electrolytic water is adjusted to a value suitable for inactivate target virus or the like and air is passed through the gas-liquid contact member 5 supplied with the electrolytic water having this concentration, whereby target virus, etc. floating in the air can be inactivated. Furthermore, even odor reacts with ozone or hydrogen peroxide in the electrolytic water when passing through the gas-liquid contact member 5, and ioni zed and dissolved in the electrolytic water, whereby the odor components are removed from the air and thus the air is deodorized.

When scale is deposited on the electrode (cathode) due to electrolysis of tap water, it is difficult to continue the electrolysis because the electrical conductivity is lowered.

In this case, it is effective to invert the polarities of the electrodes (switching the plus and minus polarities of the electrodes). The scale deposited on the cathode can be removed by performing electrolysis while the cathode is used as the anode. Under the polarity inverting control, the polarities of the electrodes may be inverted periodically by using a timer, or the polarities of the electrodes may be inverted irregularly, for example, every time the operation of the apparatus is started or the like. Furthermore, increase of the electrolysis resistance (reduction in electrolysis current or increase in electrolysis voltage) may be detected, and the polarities of the electrodes may be inverted on the basis of the detection result.

The above embodiment adopts the water supply system based on the water supply tank 11 which can be freely put in and out. However, the present invention may adopt a water pipe water supply system in which a tap water pipe is connected to the apparatus in place of the water supply tank 11 and city water (tap water) is introduced.

Still furthermore, in the above embodiment, the upper frame 74 is provided with the guide piece 79 which each water spray hole 17B faces. However, it is not necessarily required to provide the guide piece 79A. When no guide piece 79A is provided, the front plate 74B of the upper frame 74 serves as the guide piece 79A. Furthermore, the guide piece 79A is disposed so as to face each water spray hole 17B. In this case, a single slender guide piece 79A may be continuously formed on the inner surface of the upper frame 74A so as to extend in the longitudinal direction of the upper frame 74A and also face each water spray holes 17B, or a plurality of guide pieces 79A may be formed on the inner surface of the upper frame 74A so as to be intermittently arranged in the longitudinal direction of the upper frame 74A and face each water spray hole 17B.

Still furthermore, each element portion E is designed so that the second distributing sheet 84 is constructed by stacking the three sheets 84A to 84C, however, the present invention is not limited to this embodiment. The number of stacked sheets is not limited to three, and it may be set to any number. For example, when the flow amount of airpassing through the gas-liquid contact member is largest at the center portion of the gas-liquid contact member and it is gradually reduced as the position shifts to both the end sides of the gas-liquid contact member, only one sheet is disposed at the center element portion E where the air flow amount is largest, and the number of sheets is increased like two, three, etc. as the position shifts to both the end sides of the gas-liquid contact member. According to this construction, the water flow resistance at the center portion is reduced, and thus the supply amount of electrolytic water at the center portion at which the air flow amount is large is increased. Accordingly, the electrolytic water whose amount corresponds to the air flow amount canbe supplied to the gas-liquid contact member, whereby virus, etc. floating in the air passing through the gas-liquid contact member can be effectively inactivated.

Still furthermore, not only the number of sheets of the second distributing sheet is changed, but also the point diameter (mesh diameter) of the second distributing sheet may be changed (specifically, the point diameter at the center portion is set to a large value, and it is reduced as the position shifts to both the end sides).

Still furthermore, the above-described embodiments adopt an indoor air circulating system in which indoor air is sucked from a room, subjected to sterile filtration (air filtering treatment) and then returned to the room. However, air to be subjected to sterile filtration is not limited to indoor air, and outdoor air may be directly subjected to sterile filtration and then supplied to the room. Furthermore, both indoor air and outdoor air may be subjected to sterile filtration, and then supplied to the room. That is, any air in-take manner may be adopted.

Still furthermore, the above-described embodiments, the air filtering apparatus is a floor-mount type air filtering apparatus that is used under the state that it is put on the floor. However, the air filtering apparatus of the present invention is not limited to the floor-mount type air filtering apparatus, and it may be used in any condition, for example, in a wall-suspended fashion, in a ceiling-suspended fashion, in a ceiling-cassette fashion or the like.

## Claims

1. An air filtering apparatus comprising a gas-liquid contact member (5) disposed in a housing (2), an electrolytic water supply pipe (17) for dropping electrolytic water to the gas-liquid contact member so that the electrolytic water infiltrates into the gas-liquid contact member, and an air blowing fan (7) for blowing air to the gas-liquid contact member to which the electrolytic water infiltrates and blowing out the air to a room, **characterized in that** a first sheet member (76) having water retentivity for distributing the electrolytic water dropped from the electrolytic water supply pipe to the whole area of the gas-liquid contact member is disposed above the gas-liquid contact member, and the first sheet member is equipped with recess portions (76D) at which scale accumulates when hardness components in the electrolytic water precipitate as the scale.

2. The air filtering apparatus according to claim 1, wherein the first sheet member (76) is further equipped with projecting portions that are respectively continuous with the recess portions in the longitudinal direction of the first sheet member.

3. The air filtering apparatus according to claim 2, wherein the first sheet member is designed in a corrugated shape.

4. The air filtering apparatus according to claim 1, wherein the electrolytic water supply pipe is equipped with water spray holes (77) for spraying the electrolytic water therethrough, the water spray holes (77) are arranged at substantially the same pitch, and the pitch of the recess portions is set to be narrower than the pitch of the water spray holes.

5. The air filtering apparatus according to claim 1, wherein the gas-liquid contact member comprises a plurality of element portions (E), and a second sheet member (84) having water retentivity is disposed above the upper end surfaces of the respective element portions substantially in contact with the upper end surfaces concerned.

6. The air filtering apparatus according to claim 5, wherein a water spray box (74) in which the electrolytic water supply pipe is accommodated is disposed above the gas-liquid contact member, the first sheet member is held and located at a lower position than the electrolytic water supply pipe inside the water spray box, and the second sheet member is disposed below the first sheet member so as to be spaced from the first sheet member.

7. An air filtering apparatus comprising a gas-liquid contact member (5) disposed in a housing (2), an electrolytic water supply pipe (17) for dropping electrolytic water to the gas-liquid contact member so that the electrolytic water infiltrates into the gas-liquid contact member, and an air blowing fan (7) for blowing air to the gas-liquid contact member to which the electrolytic water infiltrates and blowing out the air to a room, **characterized in that** a first sheet member (91) having water retentivity for distributing the electrolytic water dropped from the electrolytic water supply pipe to the whole area of the gas-liquid contact member is disposed above the gas-liquid contact member, and the first sheet member is equipped with cut-out portions (92) through which the electrolytic water is positively discharged when hardness components in the electrolytic water precipitate as scale and accumulates on the first sheet member.

8. The air filtering apparatus according to claim 7, wherein the gas-liquid contact member comprises a plurality of element portions (E), and a second sheet member (84) having water retentivity is disposed above the upper end surfaces of the respective element portions substantially in contact with the upper end surfaces concerned.

9. The air filtering apparatus according to claim 8, wherein a water spray box (74) in which the electrolytic water supply pipe is accommodated is disposed above the gas-liquid contact member, the first sheet member is held and located at a lower position than the electrolytic water supply pipe inside the water spray box, and the second sheet member is disposed below the first sheet member so as to be spaced from the first sheet member.

# FIG.1

# FIG.2

# FIG.3

EP 1 821 043 A2

# FIG.4B

# FIG.4A

FIG.5

73

E

F

74

83

83

E

E

5

E

E

17

71

E

72

# FIG.6

FIG.7

# FIG.8

EP 1 821 043 A2

# FIG.9

FIG.10

EP 1 821 043 A2

**EP 1 821 043 A2**

## REFERENCES CITED IN THE DESCRIPTION

**Patent documents cited in the description**

- JP 2002181358 A